# EUROPEAN PATENT APPLICATION

(11) **EP 4 675 485 A1**
(43) Date of publication of application: **07.01.2026**
(21) Application number: 25187395.6
(22) Date of filing: 03.07.2025
(51) Int. Cl.: G06F 30/15, G06F 30/20, G06F 111/10, G06F 119/06

(54) **MODEL AND METHOD FOR MODELING OPERATION OF AN AIRCRAFT HYBRID ELECTRIC PROPULSION SYSTEM**

(30) Priority: 03.07.2024 US 202418763875
(71) Applicant: PRATT & WHITNEY CANADA CORP., Longueuil, Québec J4G 1A1 (CA)
(72) Inventor: Carrese, Gino, Longueuil (CA); Lu, Xuening, Longueuil (CA); Thomson, Travis, Longueuil (CA); Plamondon, Etienne, Longueuil (CA)
(74) Representative: Dehns

(57) **Abstract**

A method of modeling the operation of a HEP system (20) for an aircraft is provided. The HEP system includes a gas turbine engine (32) and an electric motor (24). The method includes: modeling the operation of a HEP system using an engine model (54) with a plurality of modules (58). Each module (58) is configured with executable instructions to receive an input operational parameter and produce an output operational parameter. The input operational parameters include one or more of an input pressure, temperature, mass flow, or power, and the output operational parameters include one or more of an output pressure, temperature, mass flow, or power. The modeling includes providing a first output operational parameter from a first module (58) to a second module (58) as a first input operational parameter, and using the second module (58) to produce a second output operational parameter using the first input operational parameter.

## Description

### BACKGROUND

The present disclosure relates to aircraft hybrid electric propulsion systems in general and to a method and an apparatus for modeling operation of a hybrid electric propulsion system in particular.

A hybrid electric propulsion ("HEP") system for an aircraft includes a thermal engine (e.g., a gas turbine engine) and at least one electric motor for providing motive force for an aircraft. An engine model that simulates the coordinated operation of the thermal engine and the electric motor may be used for development, testing, and validation of one or more aircraft control systems. It would be useful to have an engine model and method that accurately simulates the performance of the HEP system.

### SUMMARY

According to an aspect of the present disclosure, a method of modeling the operation of a hybrid electric propulsion system for an aircraft is provided. The hybrid electric propulsion system includes a gas turbine engine and an electric motor, both configured to provide motive power to the aircraft. The gas turbine engine includes compressor and turbine sections. The method includes: modeling the operation of a hybrid electric propulsion system using an engine model that includes a plurality of modules including a compressor module, a turbine module, a gearbox module, an engine air inlet module, an engine exhaust module, an inverter module, and an electric motor module. Each respective module of the plurality of modules is configured with executable instructions to receive an input operational parameter and produce an output operational parameter using the input operational parameter. The input operational parameters for the plurality of modules include one or more of an input pressure value, an input temperature value, an input mass flow value, or an input power value, and the output operational parameters for the plurality of modules include one or more of an output pressure value, an output temperature value, an output mass flow value, or an output power value. The modeling includes providing a first output operational parameter from a first module of the plurality of modules to a second module of the plurality of modules as a first input operational parameter, and using the second module of the plurality of modules to produce a second output operational parameter using the first input operational parameter.

**In** any of the aspects or embodiments described above and herein, the executable instructions for at least one respective module may include a mathematical expression.

**In** any of the aspects or embodiments described above and herein, the executable instructions for the compressor module may include a compressor performance map.

**In** any of the aspects or embodiments described above and herein, the executable instructions for the turbine module may include a turbine performance map.

In any of the aspects or embodiments described above and herein, the method may further include using the engine model to analyze an engine controller.

In any of the aspects or embodiments described above and herein, the engine controller may be an actual engine controller and the analysis may be a hardware-in-the-loop analysis.

In any of the aspects or embodiments described above and herein, the engine controller may be a digital model of an engine controller and the analysis may be a software-in-the-loop analysis.

In any of the aspects or embodiments described above and herein, the method may further include using the engine model to analyze an engine controller, and the analysis may be performed using a boundary condition. The hybrid electric propulsion system may be configured to drive a propulsion unit and the boundary condition may be a power requirement for driving the propulsion unit. The power requirement may be satisfied by a combination of a first portion of the power requirement provided by the gas turbine engine and a second portion of the power requirement provided by the electric motor. The modeling may include varying the relative amounts of the first and second portions.

**In** any of the aspects or embodiments described above and herein, the engine model may be configured to simulate the hybrid electric propulsion system operating in a steady-state mode.

**In** any of the aspects or embodiments described above and herein, in the steady-state mode the engine model may provide a power requirement for driving a propulsion unit. The power requirement may be satisfied by a combination of a first portion of the power requirement provided by the gas turbine engine and a second portion of the power requirement provided by the electric motor. The modeling may include varying the relative amounts of the first and second portions.

**In** any of the aspects or embodiments described above and herein, in the steady-state mode the engine model may provide a power requirement for driving a propulsion unit. The power requirement may be satisfied by a combination of a first portion of the power requirement provided by the gas turbine engine and a second portion of the power requirement provided by the electric motor, and the power requirement may be held constant. The first module may be the compressor module and the second module may be the turbine module. The first output operational parameter may be a first pressure value and the second output operational parameter may be a second pressure value.

In any of the aspects or embodiments described above and herein, the engine model may be configured to simulate the hybrid electric propulsion system operating in a transient mode.

In any of the aspects or embodiments described above and herein, in the transient mode, the method may include using the engine model to simulate the operation of the hybrid electric propulsion system continuously from a starting state to an idle state, from the idle state to an ascent mode, a cruise mode, and a descent mode.

**In** any of the aspects or embodiments described above and herein, the method may further include using the engine model to simulate the operation of the hybrid electric propulsion system from the descent mode to a landing mode to a shutdown mode.

According to another aspect of the present disclosure, a non-transitory computer-readable medium containing computer program instructions is provided. The computer program instructions are executable by a computer processor to perform a method of modeling the operation of a hybrid electric propulsion system for an aircraft. The hybrid electric propulsion system includes a gas turbine engine and an electric motor, both configured to provide motive power to the aircraft. The gas turbine engine includes compressor and turbine sections. The method includes: modeling the operation of a hybrid electric propulsion system using an engine model that includes a plurality of modules including a compressor module, a turbine module, a gearbox module, an engine air inlet module, an engine exhaust module, an inverter module, and an electric motor module. Each respective module of the plurality of modules is configured with executable instructions to receive an input operational parameter and produce an output operational parameter using the input operational parameter. The input operational parameters for the plurality of modules include one or more of an input pressure value, an input temperature value, an input mass flow value, or an input power value, and the output operational parameters for the plurality of modules include one or more of an output pressure value, an output temperature value, an output mass flow value, or an output power value. The modeling includes providing a first output operational parameter from a first module of the plurality of modules to a second module of the plurality of modules as a first input operational parameter, and using the second module of the plurality of modules to produce a second output operational parameter using the first input operational parameter.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, that the following description and drawings are intended to be exemplary in nature and non-limiting.

### BRIEF DESCRIPTION OF THE DRAWINGS

FIG. 1 is a diagrammatic illustration of a hybrid electric propulsion system.
FIG. 2 is a diagrammatic illustration of a gas turbine engine.
FIG. 3 is a diagrammatic illustration of an engine model in communication with a HEP system engine controller.

### DETAILED DESCRIPTION

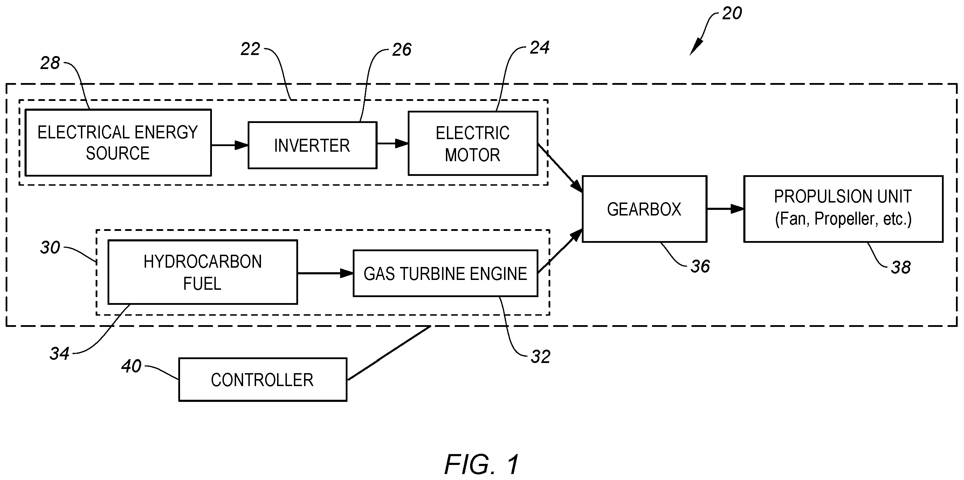

FIG. 1 diagrammatically illustrates an example of a hybrid-electric propulsion (HEP) system 20 that may be used with an aircraft. The electric power portion 22 of the HEP system 20 includes an electric motor 24, an inverter 26, and an electrical energy storage source 28. The thermal engine portion 30 of the HEP system 20 includes a gas turbine engine 32 in communication with a source of hydrocarbon fuel 34. The HEP system 20 shown in FIG. 1 also includes a gearbox 36 that is in communication with the gas turbine engine 32 and the electric motor 24, a propulsion unit 38, and a controller 40 that is in communication with the HEP system components and is configured to control operation of the HEP system 20.

The electrical energy storage device 28 may be a battery or any other type of electrical energy storage device suitable for the aircraft application. The inverter 26 may be a part of a control system that includes hardware and controls for providing electrical power to the electric motor 24. The electric motor 24 may be an alternating current (AC) motor configured to rotationally drive a component; e.g., the gearbox 36. The present disclosure is not limited to use with any particular HEP system 20 configuration.

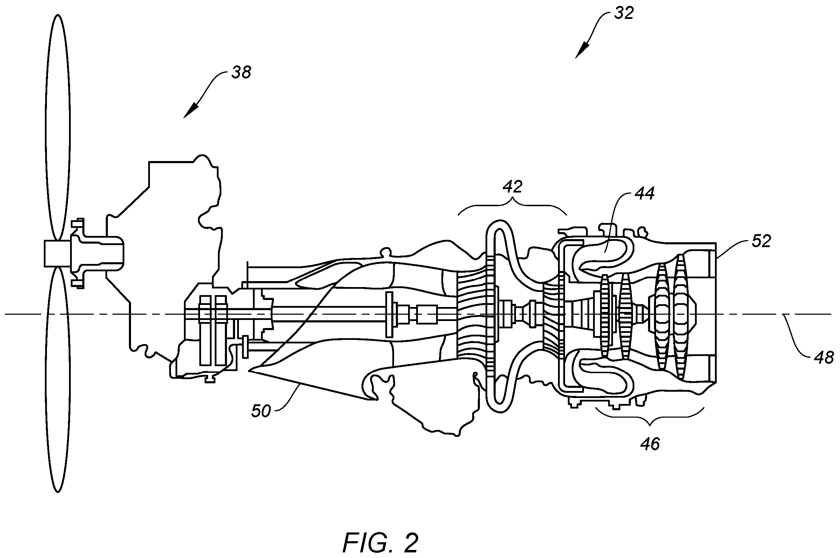

FIG. 2 diagrammatically illustrates an example of a gas turbine engine 32 that may be used in a HEP system 20 according to the present disclosure. The engine 32 includes a compressor section 42, a combustion section 44, a turbine section 46, and a rotational axis 48 for the compressor and turbine sections 44, 46. The engine 32 is in communication with a propulsion unit 38 that includes a propeller, gearbox, and a pitch control system. The engine 32 is configured such that air enters an air intake 50 and passes into the compressor section 42 where the air is compressed. The compressed air passes through the combustion section 44, where fuel is added and combusted, resulting in the production of combustion products. The combustion products and air not involved in the combustion (collectively referred to as "core gas") pass into the turbine section 46. The core gas drives the turbine section 46 and the turbine section 46 in turn drives the compressor section 42 and provides rotational power to the propulsion unit 38. The core gas subsequently exits an exhaust duct 52 of the engine. The gas path through the compressor section 42 and the turbine section 46 may be referred to as the "core gas path". The present disclosure is not limited to the gas turbine engine 32 configuration diagrammatically shown in FIG. 2.

The fuel that is provided to and combusted within the combustion section 44 is drawn from a fuel storage device (symbolized by the "Hydrocarbon Fuel" block in FIG. 1). A fuel system that includes a fuel pump and fuel injectors draws the fuel from the fuel storage device and provides it to the combustion section 44 where fuel is mixed with air and combusted. The present disclosure is not limited to particular type of fuel (e.g., aviation gas, kerosene, sustainable aviation fuel (SAF), or the like) and is not limited to any particular fuel system configuration, other than is described herein.

The HEP system 20 may include a lubrication system for the gas turbine engine 32, the gearbox 36, and other components within a HEP system 20. The lubrication system is configured to cycle a lubricant (e.g., engine oil) from a lubricant storage device (e.g., an oil tank - not shown) to the system components where the lubricant is utilized for lubrication purposes and/or cooling purposes, and return the lubricant back to the storage device. Typically, the lubricant is pumped from a lubricant tank (e.g., by a mechanical pump, or an electro-mechanical pump, or the like) to the various components. The present disclosure HEP system 20 is not limited to any particular type of lubricant.

The controller 40 may include one or more processors in signal communication with a memory device. The processor may include any type of computing device, computational circuit, processor(s), CPU, computer, or the like capable of executing a series of instructions that are stored in the memory. Instructions can be directly executable or can be used to develop executable instructions. For example, instructions may be executable or non-executable machine code or a high-level language that can be compiled to produce executable or non-executable machine code, or any combination thereof. Instructions may include data. Instructions may be organized in any format, including routines, subroutines, programs, data structures, objects, modules, applications, applets, functions, etc. Instructions may include an operating system, and/or executable software modules such as program files, system data, buffers, drivers, utilities, and the like. The instructions may apply to any functionality described herein. The memory may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be integral with the controller 40 or may be independent of, but in communication with, the controller 40. The controller 40 may include, or may be in communication with, an input device that enables a user to enter data and/or instructions, and may include, or be in communication with, an output device configured, for example to display information (e.g., a visual display or a printer), or to transfer data, etc.

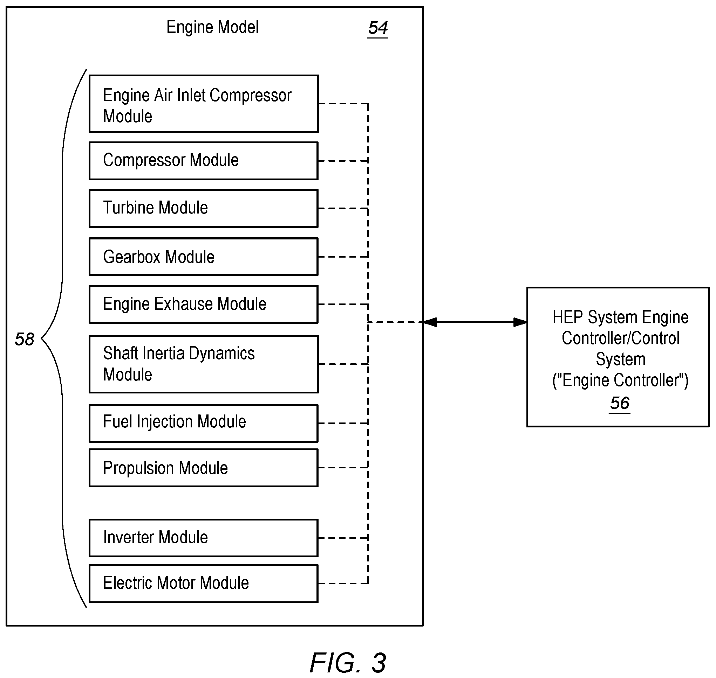

The terms "forward", "leading", "aft, "trailing" are used herein to indicate the relative position of a component or surface. As core gas air passes through the engine, a "leading edge" of a stator vane or rotor blade encounters core gas air before the "trailing edge" of the same. In an engine like that shown in FIG. 3, the compressor section 42 is "forward" of the turbine section 46 and the turbine section 46 is "aft" of the compressor section 42. The terms "upstream" and "downstream" used herein refer to the direction of a gas flow passing through an annular gas path of the gas turbine engine 32. It should also be noted that the terms "radial" and "circumferential" are used herein with respect to the rotational axis of the gas turbine engine 32.

The present disclosure is directed to an engine model 54 (shown diagrammatically in FIG. 3) for a HEP system 20 that permits the HEP system 20 to be simulated in real time, including subsystems within the HEP system 20. The engine model 54 may be used to evaluate a control system 56 for the HEP system 20, including closed-loop control system verification with engine control hardware-in-the-loop ("HIL"; e.g., used with an actual controller having hardware) and software-in-the-loop ("SIL"; e.g., a software replication of an actual controller). The engine model 54 is configured to simulate certain physical parameters, such as but not limited to pressure, temperature, mass flow, torque, and rotational speed.

To facilitate the description herein, the engine model 54 will be described as applicable to the HEP system 20 described above, including the described gas turbine engine 32 configured to drive a propeller. The present disclosure engine model 54 is not, however, limited to the application for this particular HEP system 20.

The engine model 54 includes a plurality of modules 58, each representative of a component subsystem within the HEP system 20 or representative of operational parameters related thereto. The engine model 54 and its modules 58 may be in the form of instructions stored in a non-transitory computer-readable medium that are executable by a controller to perform the functionality described herein. Modules 58 relating to the gas turbine engine 32 may include a compressor module, a turbine module, a gearbox module, an engine air inlet module, an engine exhaust module, a shaft inertia dynamics module, a fuel injection module, and a propulsion module. Modules 58 relating to the electric power portion 22 of the HEP system 20 may include an inverter module and an electric motor module. The present disclosure engine model 54 does not require all of these modules 58 be utilized, and may include additional modules 58, and any combination thereof.

Each of the modules 58 is configured with stored instructions (e.g., executable by a controller or computable via mathematical governing equations) that permit the functionality of the respective module 58 to be simulated. The simulation performed by each respective module 58 utilizes one or more numerical input operational parameters provided to that respective module 58. Examples of numerical input operational parameters include a pressure value (P), a temperature value (T), a mass flow value (W), torque (Q) or power value, and rotational speed value (N), or the like, and any combination thereof. Each module 58 is configured to receive one or more numerical input operational parameters applicable to that module 58, and configured to process the aforesaid numerical input operational parameters to produce one or more numerical output operational parameters. The numerical input operational parameter values provided to a given module 58 may be numerical output operational parameter values produced by another module 58. Hence, although a given module 58 is configured to determine numerical output parameter values using executable instructions stored within that given module 58 (e.g., mathematical expressions, empirical lookup tables, performance maps, and the like) independently of other modules 58, the output operational parameter(s) of that given module 58 may be based on the input operational parameters from other modules 58. The stored instructions within each module 58 reflect the applicable physics and can assume a variety of different formats, including mathematical expressions, empirical lookup tables, performance maps, and the like, specific to the respective module 58. The type of operational parameter input into a module 58 (e.g., pressure, temperature, mass flow, torque or power, rotational speed, or the like) may be different from the type of operational parameter output from that module 58.

Examples of the types of input and output operational parameters for particular modules 58 are provided hereinafter. For the compressor module, the operational parameters may include the temperature and pressure of the air input into the compressor section 42 and the temperature and pressure of the air output from the compressor section 42. The stored instructions may assume isentropic compression within the compressor section 42. The operational parameters for the compressor module may also include the mass flow into and out of the compressor section 42, and a determination of the torque/power required to drive the compressor section 42. In those compressor modules that utilize performance maps, the performance maps may include maps of mass flow versus pressure ratio (W vs PR) across the compressor section 42, and/or pressure ratio versus the isentropic efficiency (ETA) of the compressor section 42 (PR vs ETA). For the turbine module, the operational parameters are similar to those of the compressor module; e.g., input core gas temperature and pressure, output core gas temperature and pressure, mass flow into and out of the turbine section 46, and a determination of the torque produced by the turbine section 46 for driving the compressor section 42 and the load (e.g., the propeller). The stored instructions within the turbine module may also include performance maps of mass flow versus pressure ratio across the turbine section 46 (W vs. PR), and/or pressure ratio versus the isentropic efficiency (ETA) of the turbine section 46 (PR vs. ETA). The gearbox module may include a module for each gearbox if there is more than one gearbox. The operational parameters for a gearbox module may include input torque and rotational speed values and output torque and rotational speed values. The operational parameters for the engine air inlet module may include ambient air temperature and pressure values based on different geographic locations, annual seasons, and different altitudes. The operational parameters for the engine air exhaust module may include exhaust air temperature and pressure, and exhaust mass flow. The operational parameters for the shaft inertia dynamics module may include determined values representative of the inertia of the turbine, the inertia of the compressor, and the inertia of the gearbox(es) for different operational conditions. The operational parameters for the fuel injection module may include fuel mass flow and pressure values, and an injection timing map. The operational parameters for the propeller and/or a propeller hydraulic control system may include volumetric flow rate and pressure values for the propeller hydraulic control system, propeller pitch positions, and load produced by the propeller / torque required to drive the propeller.

Embodiments of the present disclosure engine model 54 may be used to simulate steady-state engine operation and/or transient engine operation (e.g., start-up, taxiing, takeoff, climb, cruise, landing, and shutdown). The simulated engine operation may, in turn, be used in the development and/or analysis of aircraft control systems, including a HEP controller 56. For example, the present disclosure engine model 54 may be used in a "hardware-in-the-loop" context to develop and/or analyze an actual aircraft control system; e.g., a FADEC type controller. As another example, the present disclosure engine model 54 may be used in a "software-in-the-loop" context to develop and/or analyze a digital model of a HEP controller 56. A digital model of an HEP controller 56 may be used in the development of an actual "hardware" aircraft control system. To facilitate the description herein, an aircraft control system (e.g., a HEP controller 56) with which the present engine model 54 may be used will be referred to hereinafter as an "engine controller 56". The term "engine controller 56" is intended to include any aircraft control system, which may include a controller as that term is defined herein, and with which a present disclosure engine model 54 may be used and is not limited to a controller or control system dedicated to the engine of the aircraft.

In terms of modeling steady-state engine operation, the engine model 54 may be run utilizing selected operational parameter boundary conditions. Within those operational parameter boundary conditions, operational parameters input into select modules 58 may be varied to evaluate the engine controller 56 under various scenarios. For example, the engine model 54 may be run so that the torque/power required to operate the propulsion unit 38 (e.g., see FIG. 1) is held constant (e.g., the operational parameter values input to the propulsion unit 38 module are held constant), but the respective percentages of the torque/power provided by the gas turbine engine 32 and the electric motor 24 may be varied in a given flight profile segment to evaluate the engine controller under a plurality of different gas turbine engine 32/electric motor 24 torque/power assignments. As another example, the engine model 54 may be run so that the torque/power required to operate the propulsion unit 38 is held constant, and the torque/power contributions from the gas turbine engine 32 and the electric motor 24 may also be maintained constant, but the manner in which the gas turbine engine 32 components are configured to produce the gas turbine torque/power contribution may be varied. For example, the engine model 54 may be run so that the pressure and/or temperature across the compressor section 42 (e.g., see FIG. 2) may be varied to evaluate the engine controller 56 under a plurality of different compressor operational settings, or so that the pressure and/or temperature across the turbine section 46 (e.g., see FIG. 2) may be varied to evaluate the engine controller 56 under a plurality of different turbine section 46 operational settings, and so on. As another example, the engine model 54 may be run so that the engine air exhaust module maintains the exhaust mass flow as a boundary condition. The exhaust mass flow (and other exhaust module parameters) may then be input into other modules 58 to evaluate/develop the engine controller 56. In similar fashion, the operational parameters input into select modules 58 may be varied to evaluate the engine controller 56 under various scenarios.

In terms of modeling transient engine operation, the engine model 54 may be run to replicate the operation of the HEP system 20 from an initial non-operating state, through a starting state (i.e., "sub-idle") wherein a starter (e.g., an electrical motor starter, or an APU, or an air turbine starter, or the like) is used to rotate the engine core (e.g., the compressor section 42 and the turbine section 46) until the engine 32 can achieve an idle status, through idle, ascent, cruise, descent, and landing. This embodiment of the engine model 54 may be referred to as providing a continuous start, acceleration, deceleration, and shutdown simulation. In this mode, the engine model 54 may be coupled with an actual version of an engine controller 56 (e.g., hardware-in-the-loop) or a digital model of an engine controller 56 (e.g., software-in-the-loop) and the engine controller 56 may be subject to the continuous start, acceleration, deceleration, and shutdown process by inputting varying thrust lever angle (TLA; sometimes referred to as a power lever angle) values into the engine controller 56. The engine controller 56, in turn, provides input into the engine model 54 and the engine model 54 produces operational parameters that simulate the operation of the engine 32. In a manner similar to that described herein, the engine model modules 58 are configured to receive numerical input operational parameters and to produce one or more numerical output operational parameters. The output operational parameters may then be used to evaluate the engine controller 56 under various scenarios.

Conventional engine models often have mathematically coupled operational parameter states; e.g., pressure and mass flow states, mass flow and temperature states, mass flow and torque states, torque and rotational speed states, and the like. The dynamic coupling of these operational parameter states is understood to limit the ability of an engine model to achieve engine system dynamic response accuracy and real-time execution requirements. The modular design of the present disclosure engine model 54 (with each module 58 configured with stored instructions that permit the functionality of the respective module to be simulated) enables the present disclosure engine model 54 to decouple operational parameter states mathematically and thereby overcome limitations of currently available engine models. For example, as indicated herein the present disclosure engine model 54 simulates the entire engine gas path module with a dynamic air mass conservation/matching algorithm (e.g., a non-iterative approach), by mathematical determination of each gas flow state associated with the air inlet, compressor, engine combustor, turbine, and air exhaust. As an example, air exhaust mass flow state may be determined via turbine module parameters at various operation points, where turbine module parameters been dynamically determined from pressure and temperature states from turbine performance maps and operational parameters of adjacent modules. Furthermore, air inlet, compressor, engine combustor and turbine mass flow may be mathematically calculated to ensure the overall air mass conservation and matching is achieved between different engine model modules 58 under various scenarios. In this manner, the mass flow parameter may be decoupled from other operational parameters. As another example, the compressor module may be configured to produce pressure output values based on an isentropic process within the compressor section 42. **In** this manner, the compressor pressure state may be decoupled from other operational parameters. The ability of the present disclosure engine model 54 to decouple operational parameters including temperature, pressure, torque, and power is understood to facilitate establishing convergence within the engine model 54 which in turn provides enhanced numerical stability that enhances engine controller 56 design and evaluation.

The modular design of the present disclosure engine model 54 also facilitates processing of operational parameter values from the electric power portion 22 of the **HEP** system 20 with the thermal engine portion 30 of the **HEP** system 20. The dynamics (e.g., response time and the like) of the electric power portion 22 of the **HEP** system 20 are substantially faster than those of the thermal engine portion 30 of the HEP system 20; e.g., the responsiveness of the electric power portion 22 of the HEP system 20 may be twenty times greater than the responsiveness of the thermal engine portion 30 of the HEP system 20. The modules 58 of the present disclosure engine model 54 simulate such fast/slow dynamic reactions through the gearbox module and shaft inertia dynamics modules and mathematical determination of rotational speed and torque states from operational parameters of adjacent modules 58. As a result, the present disclosure engine model 54 can be run to produce the representative dynamic responses between the electric power portion 22 and thermal engine portion 30 in a real-time basis.

While the principles of the disclosure have been described above in connection with specific apparatuses and methods, it is to be clearly understood that this description is made only by way of example and not as limitation on the scope of the disclosure. The scope of the invention is as set out in the appended claims. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. **In** alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of modeling the operation of a hybrid electric propulsion system (20) for an aircraft, the hybrid electric propulsion system including a gas turbine engine (32) and an electric motor (24), both configured to provide motive power to the aircraft, the gas turbine engine including a compressor section (42) and a turbine section (46), the method comprising:
modeling the operation of a hybrid electric propulsion system using an engine model (54) that includes a plurality of modules (58) including a compressor module, a turbine module, a gearbox module, an engine air inlet module, an engine exhaust module, an inverter module, and an electric motor module, wherein each respective module of the plurality of modules is configured with executable instructions to receive an input operational parameter and produce an output operational parameter using the input operational parameter;
wherein the input operational parameters for the plurality of modules include one or more of an input pressure value, an input temperature value, an input mass flow value, or an input power value, and the output operational parameters for the plurality of modules include one or more of an output pressure value, an output temperature value, an output mass flow value, or an output power value; and
wherein the modeling includes providing a first output operational parameter from a first module of the plurality of modules to a second module of the plurality of modules as a first input operational parameter, and using the second module of the plurality of modules to produce a second output operational parameter using the first input operational parameter.

2. The method of claim 1, wherein the executable instructions for at least one respective module of the plurality of modules comprises a mathematical expression.

3. The method of claim 1 or 2, wherein the executable instructions for the compressor module includes a compressor performance map.

4. The method of any preceding claim, wherein the executable instructions for the turbine module includes a turbine performance map.

5. The method of any preceding claim, further comprising using the engine model to analyze an engine controller.

6. The method of claim 5, wherein the engine controller is an actual engine controller and the analysis is a hardware-in-the-loop analysis.

7. The method of claim 5, wherein the engine controller is a digital model of an engine controller and the analysis is a software-in-the-loop analysis.

8. The method of any of claims 5 to 7, wherein the analysis is performed using a boundary condition; and
wherein the hybrid electric propulsion system is configured to drive a propulsion unit and the boundary condition is a power requirement for driving the propulsion unit, wherein the power requirement is satisfied by a combination of a first portion of the power requirement provided by the gas turbine engine and a second portion of the power requirement provided by the electric motor, and the modeling includes varying the relative amounts of the first portion and the second portion.

9. The method of any preceding claim, wherein the engine model is configured to simulate the hybrid electric propulsion system operating in a steady-state mode.

10. The method of claim 9, wherein in the steady-state mode the engine model provides a power requirement for driving a propulsion unit, wherein the power requirement is satisfied by a combination of a first portion of the power requirement provided by the gas turbine engine and a second portion of the power requirement provided by the electric motor, and the modeling includes varying the relative amounts of the first portion and the second portion.

11. The method of claim 9, wherein in the steady-state mode the engine model provides a power requirement for driving a propulsion unit, wherein the power requirement is satisfied by a combination of a first portion of the power requirement provided by the gas turbine engine and a second portion of the power requirement provided by the electric motor, and the power requirement is held constant; and
wherein the first module of the plurality of modules is the compressor module and the second module is the turbine module, and the first output operational parameter is a first pressure value and the second output operational parameter is a second pressure value.

12. The method of any preceding claim, wherein the engine model is configured to simulate the hybrid electric propulsion system operating in a transient mode.

13. The method of claim 12, wherein in the transient mode, the method includes using the engine model to simulate the operation of the hybrid electric propulsion system continuously from a starting state to an idle state, from the idle state to an ascent mode, a cruise mode, and a descent mode.

14. The method of claim 13, wherein in the transient mode, the method further includes using the engine model to simulate the operation of the hybrid electric propulsion system from the descent mode to a landing mode to a shutdown mode.

15. A non-transitory computer-readable medium containing computer program instructions, wherein the computer program instructions are executable by a computer processor to perform a method according to any of claims 1 to 14.
